(19) Europäisches Patentamt

European Patent Office

Office européen des brevets

(11) **EP 4 726 367 A1**

(12) **EUROPEAN PATENT APPLICATION**

(43) Date of publication:
**15.04.2026  Bulletin 2026/16**

(21) Application number: **24206234.7**

(22) Date of filing: **11.10.2024**

(51) International Patent Classification (IPC):
**G01N 21/21** *(2006.01)*    **G01N 21/19** *(2006.01)*
**G01N 21/05** *(2006.01)*    **G02B 6/032** *(2006.01)*
**G02B 6/02** *(2006.01)*

(52) Cooperative Patent Classification (CPC):
**G01N 21/19; G01N 21/05; G01N 21/21;**
**G02B 6/02328;** G01N 21/0303; G01N 2021/052;
G01N 2021/216; G01N 2201/08; G02B 2006/0325

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Max-Planck-Gesellschaft zur**
**Förderung der**
**Wissenschaften e.V.**
**80539 München (DE)**

(72) Inventors:
• **TANI, Francesco**
 **91058 Erlangen (DE)**

• **HELFRICH, Christof**
 **91058 Erlangen (DE)**
• **FROSZ, Michael**
 **91058 Erlangen (DE)**
• **JOLY, Nicolas**
 **91058 Erlangen (DE)**
• **SCHORN, Florian**
 **91058 Erlangen (DE)**

(74) Representative: **v. Bezold & Partner**
**Patentanwälte - PartG mbB**
**Ridlerstraße 57**
**80339 München (DE)**

(54) **FIBRE OPTIC DEVICE, OPTICAL SYSTEM AND METHOD FOR OPTICAL MEASUREMENT**

(57)    The invention relates to a fibre optic device (10) for an optical system (100). The fibre optic device (10) comprises a first fluid container (12), comprising a fluid inlet (12a), a fluid outlet (12b), and a light transparent window (12c). The fibre optic device (10) further comprises a second fluid container (14), comprising a fluid inlet (14a), a fluid outlet (14b), and a light transparent window (14c). The fibre optic device (10) further comprises a hollow core optical fibre (16) fluidically connecting the fluid outlet (12b) of the first fluid container (12) to the fluid inlet (14a) of the second fluid container (14) and arranged to direct light incident on the light transparent window (12c) of the first fluid container (12) to the light transparent window (14c) of the second fluid container (14), wherein the hollow core optical fibre (16) is a, preferably twisted, single ring hollow core optical fibre. The invention also relates to an optical system (100) comprising such a fibre optic device (10) and to a method for optical measurement using the optical system (100).

FIG. 1

Processed by Luminess, 75001 PARIS (FR)

**Description**

The invention relates to a fibre optic device for an optical system. The invention also relates to an optical system comprising such a fibre optic device and to a method for optical measurement, preferably using the optical system. Applications of the invention are available in the fields of chiro-optical sensing, e.g. measuring optical rotation, circular dichroism and/or helical dichroism of a fluid sample, for example, for checking the purity of a sample comprising enantiomeric molecules. In particular, the invention can be used in the pharmaceutical industry for analysing the optical rotation circular dichroism and/or helical dichroism of small volume fluid samples.

For general prior art, reference is made to the following documents:

[1] Barron, L. D. Molecular Light Scattering and Optical Activity, 2nd ed.; Cambridge University Press: Cambridge, 2004. https://doi.org/10.1017/CBO9780511535468

[2] Oh, S. S.; Hess, O. Chiral Metamaterials: Enhancement and Control of Optical Activity and Circular Dichroism. Nano Converg. 2015, 2 (1), 24. https://doi.org/10.1186/s40580- 015-0058-2

[3] Warning, L. A.; Miandashti, A. R.; McCarthy, L. A.; Zhang, Q.; Landes, C. F.; Link, S. Nanophotonic Approaches for Chirality Sensing. ACS Nano 2021, 15 (10), 15538-15566. https://doi.org/10.1021/acsnano.1c04992

[4] Kopp, V. I.; Churikov, V. M.; Singer, J.; Chao, N.; Neugroschl, D.; Genack, A. Z. Chiral Fiber Gratings. Science 2004, 305 (5680), 74-75. https://doi.org/10.1126/science.1097631

[5] Roth, P.; Chen, Y.; Günendi, M. C.; Beravat, R.; Edavalath, N. N.; Frosz, M. H.; Ahmed, G.; Wong, G. K. L.; Russell, P. S. J. Strong Circular Dichroism for the HE11 Mode in Twisted Single-Ring Hollow-Core Photonic Crystal Fiber. Optica 2018, 5 (10), 1315-1321. https://doi.org/10.1364/OPTICA.5.001315

[6] Wong, G. K. L.; Xi, X. M.; Frosz, M. H.; Russell, P. S. J. Enhanced Optical Activity and Circular Dichroism in Twisted Photonic Crystal Fiber. Opt. Lett. 2015, 40 (20), 4639-4642. https://doi.org/10.1364/OL.40.004639

[7] Mohammadi, E.; Tsakmakidis, K. L.; Askarpour, A. N.; Dehkhoda, P.; Tavakoli, A.; Altug, H. Nanophotonic Platforms for Enhanced Chiral Sensing. ACS Photonics 2018, 5 (7), 2669-2675. https://doi.org/10.1021/acsphotonics.8b00270

[8] Ma, W.; Kuang, H.; Xu, L.; Ding, L.; Xu, C.; Wang, L.; Kotov, N. A. Attomolar DNA Detection with Chiral Nanorod Assemblies. Nat. Commun. 2013, 4 (1), 2689. https://doi.org/10.1038/ncomms3689

[9] Rouxel, J. R.; Rösner, B.; Karpov, D.; Bacellar, C.; Mancini, G. F.; Zinna, F.; Kinschel, D.; Cannelli, O.; Oppermann, M.; Svetina, C.; Diaz, A.; Lacour, J.; David, C.; Chergui, M. Hard X-Ray Helical Dichroism of Disordered Molecular Media. Nat. Photonics 2022, 16 (8), 570-574. https://doi.org/10.1038/s41566-022-01022-x

[10] Bégin, J.-L.; Jain, A.; Parks, A.; Hufnagel, F.; Corkum, P.; Karimi, E.; Brabec, T.; Bhardwaj, R. Nonlinear Helical Dichroism in Chiral and Achiral Molecules. Nat. Photonics 2023, 17 (1), 82-88. https://doi.org/10.1038/s41566-022-01100-0

[11] He, C.; Shen, Y.; Forbes, A. Towards Higher-Dimensional Structured Light. Light Sci. Appl. 2022, 11 (1), 205. https://doi.org/10.1038/s41377-022-00897-3

[12] Brullot, W.; Vanbel, M. K.; Swusten, T.; Verbiest, T. Resolving Enantiomers Using the Optical Angular Momentum of Twisted Light. Sci. Adv. 2016, 2 (3), e1501349. https://doi.org/10.1126/sciadv.1501349

[13] Ni, J.; Liu, S.; Wu, D.; Lao, Z.; Wang, Z.; Huang, K.; Ji, S.; Li, J.; Huang, Z.; Xiong, Q.; Hu, Y.; Chu, J.; Qiu, C.-W. Gigantic Vortical Differential Scattering as a Monochromatic Probe for Multiscale Chiral Structures. Proc. Natl. Acad. Sci. 2021, 118 (2), e2020055118. https://doi.org/10.1073/pnas.2020055118

[14] Kerber, R. M.; Fitzgerald, J. M.; Oh, S. S.; Reiter, D. E.; Hess, O. Orbital Angular Momentum Dichroism in Nanoantennas. Commun. Phys. 2018, 1 (1), 1-7. https://doi.org/10.1038/s42005-018-0088-2

[15] Woźniak, P.; Leon, I. D.; Höflich, K.; Leuchs, G.; Banzer, P. Interaction of Light Carrying Orbital Angular Momentum with a Chiral Dipolar Scatterer. Optica 2019, 6 (8), 961-965. https://doi.org/10.1364/OPTICA.6.000961

[16] Ni, J.; Liu, S.; Hu, G.; Hu, Y.; Lao, Z.; Li, J.; Zhang, Q.; Wu, D.; Dong, S.; Chu, J.; Qiu, C.-W. Giant Helical Dichroism of Single Chiral Nanostructures with Photonic Orbital Angular Momentum. ACS Nano 2021, 15 (2), 2893-2900. https://doi.org/10.1021/acsnano.0c08941

[17] Ouyang, X.; Xu, Y.; Xian, M.; Feng, Z.; Zhu, L.; Cao, Y.; Lan, S.; Guan, B.-O.; Qiu, C.-W.; Gu, M.; Li, X. Synthetic Helical Dichroism for Six-Dimensional Optical Orbital Angular Momentum Multiplexing. Nat. Photonics 2021, 15 (12), 901-907. https://doi.org/10.1038/s41566-021-00880-1

[18] Russell, P. St. J.; Beravat, R.; Wong, G. K. L. Helically Twisted Photonic Crystal Fibres. Philos. Trans. R. Soc. Math. Phys. Eng. Sci. 2017, 375 (2087), 20150440. https://doi.org/10.1098/rsta.2015.0440

[19] Davtyan, S.; Chen, Y.; Frosz, M. H.; Russell, P. S. J.; Novoa, D. Robust Excitation and Raman Conversion of Guided Vortices in a Chiral Gas-Filled Photonic Crystal Fiber. Opt. Lett. 2020, 45 (7), 1766-1769. https://doi.org/10.1364/OL.383760

[20] Gregg, P.; Kristensen, P.; Ramachandran, S. Conservation of Orbital Angular Momentum in Air-Core Optical Fibers. Optica 2015, 2 (3), 267-270. https://doi.org/10.1364/OPTICA.2.000267

[21] Uebel, P.; Günendi, M. C.; Frosz, M. H.; Ahmed, G.; Edavalath, N. N.; Ménard, J.-M.; Russell, P. S. J. Broadband Robustly Single-Mode Hollow-Core PCF by Resonant Filtering of Higher-Order Modes. Opt. Lett. 2016, 41 (9), 1961-1964. https://doi.org/10.1364/OL.41.001961

[22] Edavalath, N. N.; Günendi, M. C.; Beravat, R.; Wong, G. K. L.; Frosz, M. H.; Ménard, J.-M.; Russell, P. S. J. Higher-Order Mode Suppression in Twisted Single-Ring Hollow- Core Photonic Crystal Fibers. Opt. Lett. 2017, 42 (11), 2074-2077. https://doi.org/10.1364/OL.42.002074

[23] Helfrich, C.; Tani, F. Optimized Microstructure Design of Hollow-Core Photonic Crystal Fibres for Ultra-Sensitive Optofluidic Sensing. In 2023 Conference on Lasers and Electro-Optics Europe & European Quantum Electronics Conference (CLEO/Europe- EQEC); 2023; pp 1-1. https://doi.org/10.1109/CLEO/Europe-EQEC57999.2023.10231708

[24] Archambault, J.-L.; Black, R. J.; Lacroix, S.; Bures, J. Loss Calculations for Antiresonant Waveguides. J. Light. Technol. 1993, 11 (3), 416-423. https://doi.org/10.1109/50.219574

[25] Tani, F.; Köttig, F.; Novoa, D.; Keding, R.; Russell, P. S. J. Effect of Anti-Crossings with Cladding Resonances on Ultrafast Nonlinear Dynamics in Gas-Filled Photonic Crystal Fibers. Photonics Res. 2018, 6 (2), 84-88. https://doi.org/10.1364/PRJ.6.000084

[26] Tyumenev, R.; Trabold, B. M.; Späth, L.; Frosz, M. H.; Russell, P. S. J. Broadband Multi-Species CARS in Gas-Filled Hollow-Core Photonic Crystal Fiber. In Conference on Lasers and Electro-Optics (2018), paper SM2K.5; Optica Publishing Group, 2018; p SM2K.5. https://doi.org/10.1364/CLEO_SI.2018.SM2K.5

[27] Alperin, S. N.; Niederriter, R. D.; Gopinath, J. T.; Siemens, M. E. Quantitative Measurement of the Orbital Angular Momentum of Light with a Single, Stationary Lens. Opt. Lett. 2016, 41 (21), 5019-5022. https://doi.org/10.1364/OL.41.005019

[28] Abramochkin, E.; Volostnikov, V. Beam Transformations and Nontransformed Beams. Opt. Commun. 1991, 83 (1), 123-135. https://doi.org/10.1016/0030-4018(91)90534-K

[29] Kotlyar, V. V.; Kovalev, A. A.; Porfirev, A. P. Astigmatic Transforms of an Optical Vortex for Measurement of Its Topological Charge. Appl. Opt. 2017, 56 (14), 4095-4104. https://doi.org/10.1364/AO.56.004095

[30] Nicolet, A.; Zolla, F.; Agha, Y. O.; Guenneau, S. Leaky Modes in Twisted Microstructured Optical Fibers. Waves Random Complex Media 2007, 17 (4), 559-570. https://doi.org/10.1080/17455030701481849

[31] Ma, X.; Liu, C.-H.; Chang, G.; Galvanauskas, A. Angular-Momentum Coupled Optical Waves in Chirally-Coupled-Core Fibers. Opt. Express 2011, 19 (27), 26515-26528. https://doi.org/10.1364/OE.19.026515

[32] Finger, M. A.; Joly, N. Y.; Weiss, T.; Russell, P. S. J. Accuracy of the Capillary Approximation for Gas-Filled Kagomé-Style Photonic Crystal Fibers. Opt. Lett. 2014, 39 (4), 821-824. https://doi.org/10.1364/OL.39.000821

[33] Marcatili, E. a. J.; Schmeltzer, R. A. Hollow Metallic and Dielectric Waveguides for Long Distance Optical Transmission and Lasers. Bell Syst. Tech. J. 1964, 43 (4), 1783- 1809. https://doi.org/10.1002/j.1538-7305.1964.tb04108.x

[34] Zeisberger, M.; Schmidt, M. A. Analytic Model for the Complex Effective Index of the Leaky Modes of Tube-Type Anti-Resonant Hollow Core Fibers. Sci. Rep. 2017, 7 (1), 11761. https://doi.org/10.1038/s41598-017-12234-5

[35] EP 3 649 090 B1

[36] EP 3 136 143 A1

[37] EP 4 030 230 A1

[38] EP 4 163 715 A1

[39] F. Schorn et al., "Measurement of Minute Liquid Volumes of Chiral Molecules Using In-Fiber Polarimetry", Analytical Chemistry 2023 95 (6), 3204-3209

[40] F. Schorn et al. "Analysis of the chemical composition of chiral components by in-fiber polarimetry", 55. Jahrestreffen Deutscher Katalytiker, B.11.14

Chiro-optical effects provide a convenient route to optically differentiate between the two enantiomer forms of chiral media and control the polarisation of light. The well-established circular dichroism (CD) has been exploited for a long time to characterize chemical and biological samples and to realize optical elements for selecting the helicity of circularly polarised light, also known as spin angular momentum (SAM) [1]. The recent advances in the understanding and fabrication of nanostructures, metamaterials and fibres have led to new optics with tailored, broadband and enhanced chiral optical properties and platforms to enhance enantioselectivity [2-8].

In comparison, helical dichroism (HD), the analogous to CD based on orbital angular momentum (OAM), is much less studied and has started attracting attention in the last two decades. Nevertheless, the effect has been already observed in a wide range of systems, both natural (e.g., molecules [9, 10]) and artificial [11], and a few works have also reported its use for distinguishing point-like (with respect to the light wavelength) enantiomers with opposite chirality [12, 13]. Set off against CD, defining OAM dichroism is less straightforward as different combinations of SAM and topological charge (i.e. OAM value) can lead to different responses [14]. In the last few years, a growing number of groups have reported nanostructures and metasurfaces exhibiting HD and achieving large extinction ratios by designing them with characteristic dimensions comparable to (and larger than) the wavelength of light [15-17]. On the other hand, helically dichroic waveguides have not been reported yet. This is despite the possibility of designing them for strong CD and excellent guidance of OAM-carrying modes and providing a promising and alternative platform for shaping the properties of light and enhancing the interaction of chiral light with matter [18-20].

For measuring chiro-optical effects in a fluid sample, known measurement setups often use cuvettes for accommodating the sample during the irradiation with polarised light. For this, the cuvettes are made of a clear, transparent material such as plastic, glass, or fused quartz, so that the light can pass through the cuvette and sample.

The disadvantage of these conventional setups is that the cuvettes usually have a relatively large volume in order to ensure a sufficient interaction distance between the light and the sample. In particular, in the field of pharmacology, often only small quantities of the substances (e.g. drugs) to be analysed are available.

Thus, it is an object of the invention to provide an improved solution for measuring chiro-optical effects of a fluid sample, wherein disadvantages and limitations of conventional techniques are preferably avoided. In particular, it is an object of the invention to provide a solution for measuring chiro-optical effects of a fluid sample that is capable of analysing small volume samples and/or provides a long interaction length of the light with the sample.

These objectives are solved by a fibre optic device, an optical system and a method, comprising the features of the independent claims, respectively. Preferred embodiments and applications of the invention result from the dependent claims.

According to a first general aspect of the disclosure, a fibre optic device for an optical system (e.g. for chiro-optical sensing, e.g. measuring the optical rotation, circular dichroism and/or helical dichroism of a fluid sample) is provided.

The fibre optic device comprises a fluid container (e.g. a fluid cell), hereinafter referred to as "first" fluid container for ease of differentiation. The first fluid container comprises a (e.g. first) fluid inlet (e.g. an inlet port and/or inlet opening), a (e.g. first) fluid outlet (e.g. an outlet port and/or outlet opening), and a (e.g. first) light transparent (e.g. glass) window. The first fluid container may be defined by a (e.g. rigid) first container body and/or enclose a (e.g. fixed volume) first fluid reservoir, preferably for receiving and/or accommodating the fluid sample.

The fibre optic device further comprises a "second" fluid container (e.g. a second fluid cell). The second fluid container comprises a (e.g. second) fluid inlet (e.g. an inlet port and/or inlet opening), a (e.g. second) fluid outlet (e.g. an outlet port and/or outlet opening), and a (e.g. second) light transparent (e.g. glass) window. The second fluid container may be defined by a (e.g. rigid) second container body and/or enclose a (e.g. fixed volume) second fluid reservoir, preferably for receiving and/or accommodating the fluid sample.

The fibre optic device further comprises a hollow core optical fibre. For example, the hollow core optical fibre may be an optical fibre having a (e.g. central) hollow region for guiding light, so that preferably only a minor portion of the optical power propagates in the solid fibre material. The hollow core optical fibre fluidically connects the fluid outlet of the first fluid container to the fluid inlet of the second fluid container, preferably for transferring and/or exchanging the fluid sample between the first fluid container and the second fluid container (e.g. between the first and second fluid reservoirs). In addition, the hollow core optical fibre is arranged to direct light incident on the (e.g. first) light transparent window of the first fluid container to the (e.g. second) light transparent window of the second fluid container. For this, the hollow core optical fibre may be arranged such that light incident on the (e.g. first) light transparent window of the first fluid container is coupled in the hollow core fibre, propagates through the hollow core optical fibre, and exits the hollow core optical fibre towards the (e.g. second) light transparent window of the second fluid container.

In particular, the hollow core optical fibre is a single ring hollow core optical fibre. For example, the hollow core optical fibre may comprise only a single ring of hollow tubes (e.g. each with circular or elliptical cross-section) around a (e.g. air filled or fluid sample filled) hollow core region, which will be described in more detail below. Thus, the hollow core optical fibre is preferably not be based on a photonic crystal structure or a Kagome fibre. In a preferred embodiment, the hollow core optical fibre is a (e.g. helically) twisted single ring hollow core optical fibre. For example, the hollow core optical fibre may be (e.g. internally) helically twisted around its (e.g. central) longitudinal or fibre axis, preferably such that the hollow tubes do not run straight, but spiral around the hollow core region along the longitudinal/fibre axis.

Advantageously, by providing the ability to measure the fluid sample within the hollow core optical fibre, the claimed fibre optic device requires largely reduced sample volumes (by at least 1000 times) compared to currently commercially available systems. In addition, the fibre optic device provides a long interaction length of the light with the sample (essentially defined by the length of the hollow core optical fibre), thereby increasing the sensitivity required for chiral measurements. In this respect, the particular design of the optical fibre ensures that the properties of the light passing through the optical fibre are not significantly altered, which would affect the chiral measurements. For example, the use of the claimed single ring hollow core optical fibre enables the suppression of unwanted higher order modes, which is required to ensure excellent polarisation preservation, and has low wavelength independent birefringence.

According to a first aspect of the disclosure, the first fluid container and the second fluid container may be arranged at opposite and/or different (e.g. distal) ends of the hollow core optical fibre. For example, the first fluid container may be arranged at a first (e.g. distal) end of the hollow core optical fibre and the second fluid container may be arranged at a (e.g. different) second (e.g. distal) end of the hollow core optical fibre, the second end being opposite the first end. In this context, the first end of the hollow core optical fibre may be (e.g. at least partially) accommodated in and/or connected to the (e.g. first) outlet of the first fluid container, while the second end of the hollow core optical fibre may be (e.g. at least partially) accommodated in and/or connected to the (e.g. second) inlet of the second fluid container.

In addition or alternatively, the hollow core optical fibre may comprise several (e.g. separate) fluid passages (e.g. fluid channels), each configured to transport a fluid sample between the first fluid container (e.g. its first fluid reservoir) and the second fluid container (e.g. its second fluid reservoir). For example, the hollow core region of the hollow core optical fibre may be one of the several fluid passages. In addition or alternatively, the interiors of each of the tubes of the single ring of hollow tubes may be another one of the several fluid passages.

In addition or alternatively, the hollow core optical fibre may have a length between 1 cm and 2 m, preferably between 5 cm and 50 cm, particularly preferred between 10 cm and 30 cm. Advantageously, this enables a beneficial trade-off between interaction length and required sample volume.

According to another aspect of the disclosure, fibre optic device the hollow core optical fibre may comprise an outer cladding region (e.g. ring-shaped in cross-section). The hollow core optical fibre may further comprise (e.g. five) hollow tubes, surrounded by the outer cladding region, wherein preferably each of the hollow tubes is fused to the outer cladding region, e.g. to form (e.g. in cross-section) a (e.g. concentric) ring around a (or the) hollow core region of the hollow core optical fibre.

According to another aspect of the disclosure, the hollow core optical fibre may comprise (e.g. exactly) five hollow tubes. For example, the hollow core optical fibre may be a single ring five tube hollow core optical fibre. This design has been found to have particularly advantageous light guiding properties.

In addition or alternatively, each of the hollow tubes may have a circular cross-section (e.g. in a plane perpendicular to the longitudinal axis of the hollow core optical fibre). Alternatively, each of the hollow tubes may have an elliptical cross-section.

In addition or alternatively, the hollow tubes may not touch each other (e.g. directly). For example, there may be a free space between each two adjacent hollow tubes and/or the hollow tubes may be connected only via the outer cladding region.

In addition or alternatively, the hollow tubes may be arranged symmetrically around the hollow core region. For example, in a plane perpendicular to the longitudinal axis of the hollow core optical fibre, the hollow tubes may form a regular polygon (e.g. pentagon) and/or may be arranged as a regular polygon (e.g. pentagon).

In addition or alternatively, each of the hollow tubes may be free of a nested sub tube. For example, each of the hollow tubes may be empty, preferably without any substructure arranged inside the respective hollow tube.

According to another aspect of the disclosure, the hollow core region may have (e.g. in a plane perpendicular to the longitudinal axis of the hollow core optical fibre) a core diameter D greater than 10 $\mu$m, preferably greater than 14 $\mu$m. In addition or alternatively, the hollow core region may have a core diameter D less than or equal to 22 $\mu$m, preferably less than or equal to 20 $\mu$m. For example, D may be 10 $\mu$m $< D <$ 22 $\mu$m, preferably 14 $\mu$m $< D \leq 20$ $\mu$m.

In addition or alternatively, each of the hollow tubes may have (e.g. in a plane perpendicular to the longitudinal axis of the hollow core optical fibre) an inner tube diameter d, wherein the inner tube diameter relative to the core diameter, i.e. d/D, may be between 0.66 and 0.73 (e.g. 0.7) and/or wherein the inner tube diameter may be smaller than the core diameter, i.e. d < D.

In addition or alternatively, the hollow core optical fibre may have a higher order modes (HOM) suppression of at least 40 dB/m, preferably of at least 70 dB/m, particularly preferred of at least 110 dB/m. Advantageously, by suppressing HOMs, preserving the polarisation purity of the light travelling along the hollow core optical fibre can be ensured.

In addition or alternatively, the hollow core optical fibre may be a twisted hollow core fibre, having a (e.g. internal) twist rate (e.g. along its longitudinal or fibre axis) between 10 rad/m and 300 rad/m, preferably between 30 rad/m and 200 rad/m, particularly preferred between 50 rad/m and 150 rad/m. The twist rates in this context preferably refer to the internal structure, i.e. the twisting of the hollow tubes around the hollow core region. Advantageously, by using the twist rates mentioned, linear birefringence and its wavelength dependence can be reduced, while at the same time a high loss for HOMs can be ensured.

In addition or alternatively, each hollow tube may have a wall thickness between 100 nm and 1 $\mu$m, preferably between 200 nm and 800 nm, particularly preferred between 300 nm and 750 nm. For example, the wall thickness may be the distance between an inner radius and an outer radius of the respective hollow tube in a plane perpendicular to the longitudinal axis of the hollow core optical fibre. In a preferred embodiment, each hollow tube may have a wall thickness of 350 nm or 700 nm.

According to another aspect of the disclosure, the outer cladding region may directly contact each of the hollow tubes. For example, the hollow tubes may be fixed (e.g. fused) to the outer cladding region.

In addition or alternatively, each of the hollow tubes may be (e.g. directly) attached to the outer cladding region.

In addition or alternatively, the outer cladding region may have a thickness T between of at least 20 $\mu$m, preferably of at least 70 $\mu$m, particularly preferred of at least 150 $\mu$m. Advantageously, these outer cladding thicknesses ensure that the hollow core optical fibre is robust to mechanical stress and can provide an adequate polarisation extinction ratio.

In addition or alternatively, the outer cladding region and/or the hollow tubes may be made of fused silica glass and/or soft-glass.

According to another aspect of the disclosure, the (e.g. first) light transparent window of the first fluid container and the (e.g. first) fluid outlet of the first fluid container may be arranged (e.g. directly) facing each other and/or flush with each other. For example, there may be a direct (e.g. straight) line of sight between the (e.g. first) light transparent window of the first fluid container and the (e.g. first) fluid outlet of the first fluid container. In addition or alternatively, the (e.g. first) light transparent window of the first fluid container and the first (e.g. distal) end of the hollow core optical fibre may also be arranged (e.g. directly) facing each other and/or flush with each other. Advantageously, this ensures an efficient coupling of light into the hollow core optical fibre.

In addition or alternatively, the (e.g. second) light transparent window of the second fluid container and the (e.g. second) fluid inlet of the second fluid container may be arranged (e.g. directly) facing each other and/or flush with each other. For example, there may be a direct (e.g. straight) line of sight between the (e.g. second) light transparent window of the second fluid container and the (e.g. second) fluid inlet of the second fluid container. In addition or alternatively, the (e.g. second) light transparent window of the second fluid container and the second (e.g. distal) end of the hollow core optical fibre may also be arranged (e.g. directly) facing each other and/or flush with each other. Advantageously, this ensures an efficient extraction of light from the hollow core optical fibre.

In addition or alternatively, the (e.g. first) fluid inlet and the (e.g. first) fluid outlet of the first fluid container may be arranged inclined (e.g. perpendicular) to each other, preferably such that the fluid sample experiences a change of direction on its way from the (e.g. first) fluid inlet of the first fluid container to the (e.g. first) fluid outlet of the first fluid container. For example, the (e.g. first) fluid inlet and the (e.g. first) fluid outlet may be non-arranged parallel and/or not on the same side or opposite sides of the first fluid container.

In addition or alternatively, the (e.g. second) fluid inlet and the (e.g. second) fluid outlet of the second fluid container may be arranged inclined (e.g. perpendicular) to each other, preferably such that the fluid sample experiences a change of direction on its way from the (e.g. second) fluid inlet of the second fluid container to the (e.g. second) fluid outlet of the second fluid container. For example, the (e.g. second) fluid inlet and the (e.g. second) fluid outlet may be non-arranged parallel and/or not on the same side or opposite sides of the second fluid container.

In addition or alternatively, the hollow core optical fibre (e.g. its contour and/or outer boundary) may run along a straight line between the first fluid container and the second fluid container. This does not affect the option that the hollow core optical fibre may internally have a twisted geometry, where the hollow tubes helically spiral around the hollow core region along the longitudinal/fibre axis.

According to another aspect of the disclosure, the fibre optic device may comprise a first coupling element (e.g. a ferrule). Thereby, a first end portion (e.g. the first end) of the hollow core optical fibre may preferably be received in the first coupling element. In addition or alternatively, the hollow core optical fibre (e.g. its first end portion) may preferably be (e.g. pressure-tightly) secured to the first fluid container (e.g. to its outlet) via the first coupling element (e.g. preferably in a force-locking and/or form-locking manner). For example, the first coupling element may (e.g. mechanically) connect the hollow core optical fibre (e.g. its first end portion) and the first fluid container (e.g. its outlet) to each other.

In a preferred embodiment, the first coupling element and the first fluid container (e.g. its outlet) may be (e.g. pressure-tightly) connected to each other via a (e.g. first) screw connection. For example, the first coupling element and the first fluid container (e.g. its outlet) may each comprise a threaded portion that correspond to each other.

In addition or alternatively, the fibre optic device may comprise at least one first sealing element, arranged between the first coupling element and the hollow core optical fibre (e.g. between the first coupling element and the first end portion of the hollow core optical fibre). Preferably, the least one first sealing element is tubular (e.g. a sealing tube) and/or circumferentially surrounds the hollow core optical fibre (e.g. its first end portion). In addition or alternatively, the at least one first sealing element may be (e.g. elastically) deformable, preferably to protect the hollow core optical fibre from excessive pressure loads. The first coupling element and the hollow core optical fibre may be fluid-tightly sealed to each other via the at least one first sealing element.

According to another aspect of the disclosure, the fibre optic device may comprise a second coupling element (e.g. a ferrule). Thereby, a second end portion (e.g. the second end) of the hollow core optical fibre may preferably be received in the second coupling element. In addition or alternatively, the hollow core optical fibre (e.g. its second end portion) may preferably be (e.g. pressure-tightly) secured to the second fluid container (e.g. to its inlet) via the second coupling element (e.g. preferably in a force-locking and/or form-locking manner). For example, the second coupling element may (e.g. mechanically) connect the hollow core optical fibre (e.g. its second end portion) and the second fluid container (e.g. its inlet) to each other.

In a preferred embodiment, the second coupling element and the second fluid container (e.g. its inlet) may be (e.g. pressure-tightly) connected to each other via a (e.g. second) screw connection. For example, the first coupling element and the second fluid container (e.g. its inlet) may each comprise a threaded portion that correspond to each other.

In addition or alternatively, the fibre optic device may comprise at least one second sealing element, arranged between the second coupling element and the hollow core optical fibre (e.g. between the second coupling element and the second end portion of the hollow core optical fibre).

Preferably, the least one second sealing element is tubular (e.g. a sealing tube) and/or circumferentially surrounds the hollow core optical fibre (e.g. its first end portion). In addition or alternatively, the at least one second sealing element may be (e.g. elastically) deformable, preferably to protect the hollow core optical fibre from excessive pressure loads. The second coupling element and the hollow core optical fibre may be fluid-tightly sealed to each other via the at least one second sealing element.

According to another aspect of the disclosure, the hollow core optical fibre may be detachable connected to the first fluid container (e.g. its first outlet). For example, the hollow core optical fibre may be reversibly attachable to and detachable from the first fluid container, e.g. via a (e.g. first) clamp and/or screw connection. In addition or alternatively, the hollow core optical fibre may be detachable connected to the second fluid container (e.g. its second inlet). For example, the hollow core optical fibre may be reversibly attachable to and detachable from the second fluid container, e.g. via a (e.g. second) clamp and/or screw connection.

In addition or alternatively, the hollow core optical fibre, the first fluid container, and the second fluid container may be integrally connected to each other, e.g. to form a single piece. Preferably, the hollow core optical fibre, the first fluid container, and the second fluid container cannot be separated from each non-destructively. For example, the hollow core optical fibre, the first fluid container, and the second fluid container may be fused and/or welded to each other and/or formed as a single piece.

According to another general aspect of the disclosure, an optical system (e.g. an optical polarimeter system) is provided. Preferably, the optical system is an optical system for optical measurement, particularly preferred for measuring an optical activity (e.g. a optical rotation) and/or circular dichroism and/or helical dichroism of a fluid sample (e.g. an enantiomeric excess of the fluid sample). The optical system comprises a fibre optic device as disclosed herein. Consequently, the limitations disclosed in connection with the fibre optic device shall be disclosed and claimable also in connection with the optical system. The same shall apply vice versa.

The optical system further comprises a polarised light source device (e.g. a polarised laser light source device) configured and arranged to generate a (e.g. circularly or linearly) polarised light beam (e.g. having a known and/or well-defined polarisation) incident on the (e.g. first) light transparent window of the first fluid container. For example, the polarised light source device may comprise a light source configured to directly emit a light beam with a well-defined (e.g. circular or linear) polarisation. Alternatively, the polarised light source device may comprise a light source configured to emit unpolarised light and a polariser configured to polarise the emitted light to generate the polarised light beam. For measuring helical dichroism, the polarised light source device may be optionally further configured to generate the polarised light beam such that it carries a topological charge. For example, the polarised light source device may be configured to excite the topological charge via a vortex retarder.

The optical system further comprises a polarisation detector device (e.g. a polarisation analyser). The polarisation detector device may be arranged to receive an output light beam exiting the (e.g. second) light transparent window of the second fluid container and/or configured to generate an output signal, which depends on (e.g. varies with) the polarisation state of the received output light beam. For example, the polarisation detector device may be configured to determine and/or measure the (e.g. spatial) polarisations state of the received output light beam. In this context, the polarisation detector device may, for example, comprise a (e.g. movable) analyser polariser (e.g. a Nicol prism, Wollaston prism, and/or a wire-grid polariser) and/or a photodetector.

Advantageously, the optical system allows for reliably measuring the optical properties, in particular the optical rotation and/or helical dichroism and/or circular dichroism (e.g. an enantiomeric excess), of the fluid sample, wherein, compared to currently commercially available systems, only a small amount of the fluid sample is required.

According to an aspect of the disclosure, the polarised light beam may be linearly polarised. Alternatively, the polarised light beam may be circularly polarised.

In addition or alternatively, the polarised light beam may have a wavelength between 100 nm and 2000 nm, preferably between 200 nm and 1000 nm, particularly preferred between 400 nm and 600 nm. For example, the polarised light beam may comprise UV light, IR light, and/or visible light.

In addition or alternatively, the polarised light source device may be directly attached to the (e.g. first) light transparent window of the first fluid container. For example, the polarised light source device may be glued and/or fused to the (e.g. first) light transparent window of the first fluid container. In addition or alternatively, the polarised light source device may be arranged directly adjacent to the (e.g. first) light transparent window of the first fluid container. For example, there may be no (air) gap between the polarised light source device and the (e.g. first) light transparent window of the first fluid container. In addition or alternatively, the polarised light source device may be supported by the (e.g. first) light transparent window of the first fluid container. For example, the polarised light source device may be configured as a lightweight light-emitting diode (LED) device directly connected to the (e.g. first) light transparent window of the first fluid container.

In addition or alternatively, the polarised light source device may comprise a light source (e.g. a laser light source) configured to generate (and/or emit) a light beam. The light beam may be polarised or unpolarised. The polarised light source device may further comprise a polariser (e.g. a linear polariser) arranged to polarise the generated light beam (e.g. in a well-defined polarisation state) to generate the polarised light beam. For example, the polariser may be a (e.g. absorptive and/or beam-splitting) linear analyser polariser and/or comprise a wave plate (e.g. a half-wave plate and/or quarter-wave plate).

According to another aspect of the disclosure, the polarisation detector device may comprise a, preferably rotatable and/or rotating, analyser polariser. For example, the analyser polariser may be a (e.g. absorptive and/or beam-splitting) linear analyser polariser and/or comprise a polarising prism. The analyser polariser may be arranged to polarise the output light beam to generate a polarised detection light beam. For example, the analyser polariser may only let light waves of the output light beam of a specific polarisation pass through while blocking light waves of the output light beam of other polarisations. Preferably, the analyser polariser may have a defined orientation (e.g. perpendicular or parallel) with respect to the polariser of the polarised light source device.

In addition or alternatively, the polarisation detector device may comprise a photodetector, configured to receive the detection light beam and/or configured to produce the output signal based on an intensity, a power, an energy, and/or a wavelength of the received detection light beam. For example, the photodetector may comprise a charge-coupled device (CCD), a complementary metal-oxide-semiconductor (CMOS) device, a phototransistor, and/or a photodiode.

According to another aspect of the disclosure, the optical system may further comprise at least one focusing element. For example, the at least one focusing element may comprise a focusing lens, a focusing mirror and/or a focusing metamaterial-structure. Preferably, the at least one focusing element is arranged to focus the generated polarised light beam onto the (e.g. first) light transparent window of the first fluid container and/or onto the first (e.g. distal) end of the hollow core optical fibre. For example, the at least one focusing element may be arranged in the beam path between the polarised light source device and the (e.g. first) light transparent window of the first fluid container. In addition or alternatively, the at least one focusing element may be arranged to focus the output light beam exiting the (e.g. second) light transparent window of the second fluid container onto the polarisation detector device. For example, the at least one focusing element may be arranged in the beam path between the (e.g. second) light transparent window of the second fluid container and the polarisation detector device and/or between the analyser polariser and the polarisation detector device.

In addition or alternatively, the optical system may further comprise at least one collimating element. For example, the at least one collimating element may comprise a collimating lens, a collimating mirror and/or a collimating metamaterial-structure. Preferably, the at least one collimating element may be arranged to collimate the output light beam before entering the polarisation detector device and/or before reaching the analyser polariser. For example, the at least one collimating element may be arranged in the beam path between the (e.g. second) light transparent window of the second fluid container and the polarisation detector (e.g. its analyser polariser).

In a preferred embodiment, the at least one collimating element may comprise an analyser collimating element arranged in the beam path between the (e.g. second) light transparent window of the second fluid container and the analyser polariser and configured and/or arranged to collimate the output light beam before reaching the analyser polariser. Further, the at least one focusing element may comprise an analyser focusing element arranged in the beam path between the analyser polariser and the photodetector and configured and/or arranged to focus the polarised detection light beam generated by the analyser polariser onto the photodetector. In this context, the analyser collimating element and/or the analyser polariser and/or the analyser focusing element may be integrated in a single component.

According to another general aspect of the disclosure, a method for optical measurement is provided. Preferably, the method is a method for measuring an optical activity (e.g. optical rotation) and/or circular dichroism and/or helical dichroism of a fluid sample (e.g. to determine an enantiomeric excess). In addition or alternatively, the method may be a method for measuring Faraday rotation of a (or the) fluid sample. Particularly preferred, the method uses an optical system as disclosed herein. Consequently, the limitations discloses in connection with the optical system and the fibre optic device shall be disclosed and claimable also in connection with the method. The same shall apply vice versa.

The method comprises introducing (e.g. pressing and/or pumping) a (or the) fluid sample into a hollow core optical fibre (e.g. into its fluid passages), wherein the hollow core optical fibre is a (e.g. twisted) single ring hollow core optical fibre. Preferably, this is done via the fibre optic device. For example, the step of introducing may comprise applying an overpressure at the (e.g. first) fluid inlet of the first fluid container (e.g. by using a syringe) to press the fluid sample from the first fluid container through the hollow core optical fibre to the second fluid container. In addition or alternatively, the step of introducing may comprise applying an under pressure at the (e.g. second) fluid outlet of the second fluid container (e.g. by using a pump) to suck the fluid sample from the first fluid container through the hollow core optical fibre to the second fluid container. Preferably, the step of introducing thus comprises flowing of the fluid sample within the hollow core optical fibre from the first (e.g. distal) end of the hollow core optical fibre to the second (e.g. distal) end of the hollow core optical fibre.

The method further comprises passing a polarised light beam (e.g. generated by a polarised light source device) through the hollow core optical fibre and the fluid sample introduced in the hollow core optical fibre. For example, the step of coupling the polarised light beam into the first (e.g. distal) end of the hollow core optical fibre and/or guiding the polarised light beam within the hollow core optical fibre from the first (e.g. distal) end of the hollow core optical fibre to the second (e.g. distal) end of the hollow core optical fibre. Preferably, the polarised light beam thus propagates along the longitudinal axis or fibre axis of the hollow core optical fibre and/or confined by the outer cladding region. In order to couple the polarised light beam into the hollow core optical fibre, the step of passing may comprise directing the polarised light beam onto the (e.g. first) light transparent window of the first fluid container and/or onto the first (e.g. distal) end of the hollow core optical fibre.

For measuring helical dichroism, the polarised light beam may optionally carry a topological charge.

Optionally, for example for measuring Faraday rotation, the method may further comprise applying a magnetic field to the fluid sample introduced in the hollow core optical fibre, preferably to magnetise the fluid sample introduced in the hollow core optical fibre.

The method further comprises altering (e.g. rotating) polarisation characteristics (e.g. the direction of polarisation) of the polarised light beam while passing through the hollow core optical fibre and the (e.g. magnetised) fluid sample by interacting with the (e.g. magnetised) fluid sample to generate an output light beam. For example, the fluid sample may comprise an optically active and/or chiral medium configured to rotate the direction of polarisation of the polarised light beam. In addition or alternatively, the fluid sample may comprise a magneto-active or Faraday-active material.

The method further comprises measuring and/or determining a polarisation state of the generated output light beam, preferably via a polarisation detector device. In addition or alternatively, the method may further comprise generating an output signal, which depends on (e.g. varies with) the polarisation state of the generated output light beam, preferably via a (or the) polarisation detector device. The measuring of the polarisation state may be done, e.g., by comparing polarisation characteristics of the polarised light beam and the output light beam. For example, the step of measuring the polarisation state may comprise measuring the angle by which the polarisation of the output light beam is rotated compared to the polarisation of the polarised light beam. In addition or alternatively, the step of measuring the polarisation state may comprise determining the enantiomeric excess of the fluid sample, i.e. the ratio of R- to S-enantiomers in the fluid sample given by $(c_R-c_S)/(c_R+c_S)$, wherein $c_R$ is the concentration of the R-enantiomers and $c_S$ is the concentration of the S-enantiomers.

According to an aspect of the disclosure, the fluid sample may be a liquid (e.g. a liquid solution). Alternatively, the fluid sample may also be gaseous or a gas.

In addition or alternatively, the fluid sample may comprise at least one chiral molecule and/or at least one chiral ion. A molecule or ion may be called chiral if it cannot be superposed on its mirror image by any combination of rotations, translations, and some conformational changes.

In addition or alternatively, the fluid sample may comprise at least one enantiomer. An enantiomer may be one of two stereoisomers that are nonsuperposable onto their own mirror image.

In addition or alternatively, the fluid sample may comprise a magneto-active or Faraday-active material. A material may be called magneto- or Faraday-active if it, when placed in a magnetic field, changes the polarisation characteristic of light.

According to another aspect of the disclosure, the step of introducing comprises pressing or sucking the fluid sample successively through the following components: an (e.g. first) inlet of a first fluid container, the hollow core optical fibre fluidically connected to an (e.g. first) outlet of the first fluid container, an (e.g. second) inlet of a second fluid container fluidically connected to the hollow core optical fibre, and an (e.g. second) outlet of the second fluid container. Preferably, the afore-mentioned components form part of the fibre optic device and/or optical system disclosed herein.

According to another aspect of the disclosure, the fluid sample (e.g. continuously) may flow through the hollow core optical fibre while the polarised light beam passes through the hollow core optical fibre and the fluid sample introduced in the hollow core optical fibre. For example, there may be a (e.g. continuously) flow of the fluid sample within the hollow core optical fibre (e.g. generates by pumping and/or pressing the fluid sample through the hollow core optical fibre) while the polarised light beam passes through the hollow core optical fibre and the fluid sample introduced in the hollow core optical fibre.

Alternatively, the fluid sample may be static and/or may not flow through the hollow core optical fibre while the polarised light beam passes through the hollow core optical fibre and the fluid sample introduced in the hollow core optical fibre.

Further details and advantages of the disclosure are described in the following with reference to the attached drawings, which show in:

Figure 1: a schematic illustration of a fibre optic device according to an embodiment;

Figure 2: a cross-sectional view of a single ring hollow core optical fibre according to an embodiment;

Figure 3: a pseudo 3D view of a single ring hollow core optical fibre according to an embodiment;

Figure 4: a schematic illustration of optical system according to an embodiment;

Figure 5: a flow diagram of a method for optical measurement according to an embodiment; and

Figure 6: a schematic illustration of a setup for characterizing a single ring hollow core optical fibre according to an embodiment; and

Figure 7: a schematic illustration of an optical system according to another embodiment.

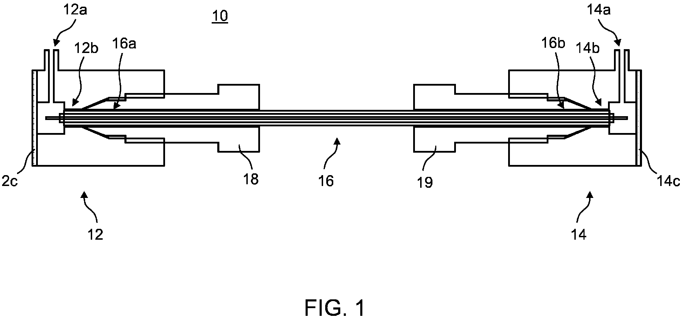

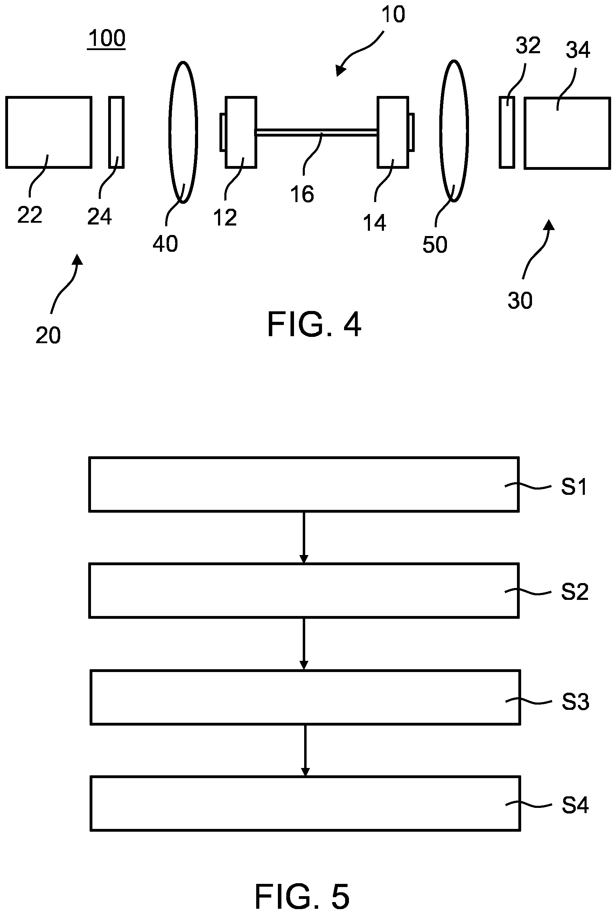

Figure 1 shows a schematic (sectional) illustration of a fibre optic device 10 according to an embodiment. The fibre optic device 10 may be standalone or form part of an optical system 100, for example, shown in Figure 4. The fibre optic device 10 and/or the optical system 100 may be used for measuring the optical rotation and/or circular dichroism of a fluid sample, wherein the interaction of a polarised light beam with the fluid sample analysed. In this context, the fibre optic device 10 advantageously provides a long interaction length between the fluid sample and the polarised light beam, while at the same time requiring only a small volume of the fluid sample, as outlined below.

The fibre optic device 10 shown in Figure 1 comprises a first fluid container 12, a second fluid container 14, and a hollow core optical fibre 16 fluidically connecting the first fluid container 12 and the second fluid container 14. Preferably, the hollow core optical fibre 16 directly fluidically connects the first fluid container 12 and the second fluid container 14 and/or is (e.g. directly) attached (e.g. fixed) to the first fluid container 12 and the second fluid container 14.

The first fluid container 12, the second fluid container 14, and the hollow core optical fibre 16 may be configured to accommodate the fluid sample, e.g. a liquid or gas. For example, the first fluid container 12 may comprise and/or be delimited by a (e.g. fluid-tight and/or closed) first container body, e.g. having several first wall sections. In addition, the second fluid container 14 may comprise and/or be delimited by a (e.g. fluid-tight and/or closed) second container body, e.g. having several second wall sections.

The fibre optic device 10 may be configured that the fluid sample can flow from the first fluid container 12 via the hollow core optical fibre 16 to the second fluid container 14, or vice versa. For example, fluid sample may be exchangeable between the first fluid container 12 and the second fluid container 14 via the hollow core optical fibre 16. In this context, the first fluid container 12 and the second fluid container 14 may be arranged at opposite ends of the hollow core optical fibre 16 and/or the hollow core optical fibre 16 may provide at least one fluid passage configured to transport the fluid sample between the first fluid container 12 and the second fluid container 14.

Preferably, the fluid sample comprises an optically active substance. For example, the fluid sample may comprise at least one chiral molecule and/or at least one chiral ion. The fluid sample may be organic or inorganic.

For introducing the fluid sample into the first fluid container 12, the first fluid container 12 and/or its first container body may comprise a fluid inlet 12a, which may be referred to as "first" fluid inlet 12a for ease of differentiation. For example, the first fluid inlet 12a may be configured as an inlet port and/or inlet opening. Further, the first fluid container 12 and/or its first container body may comprise a fluid outlet 12b, which may be referred to as "first" fluid outlet 12b for ease of differentiation. The first fluid outlet 12b may be configured, for example, as an outlet port and/or outlet opening. Preferably, the first fluid inlet 12a and the first fluid outlet 12b are arranged at different sides and/or first wall sections of the first container body. For example, the first fluid inlet 12a and the first fluid outlet 12b may be arranged inclined (e.g. perpendicular) to each other.

Similarly, the second fluid container 14 and/or its second container body may comprise a fluid inlet 14a, which may be referred to as "second" fluid inlet 14a for ease of differentiation. For example, the second fluid inlet 14a may be configured as an inlet port and/or inlet opening. Further, the second fluid container 14 and/or its second container body may comprise a fluid outlet 14b, which may be referred to as "second" fluid outlet 14b for ease of differentiation. The second fluid outlet 14b may be configured, for example, as an outlet port and/or outlet opening. Preferably, the second fluid inlet 14a and the second fluid outlet 14b are arranged at different sides and/or second wall sections of the second container body. For example, the second fluid inlet 14a and the second fluid outlet 42b may be arranged inclined (e.g. perpendicular) to each other.

Thereby, the hollow core optical fibre 16 may fluidically connect the first fluid outlet 12b of the first fluid container 12 to the second fluid inlet 14a of the second fluid container 14. The hollow core optical fibre 16 may at least in parts accommodated and/or arranged in the first fluid outlet 12b and the second fluid inlet 14a.

For example, the fibre optic device 10 and/or the hollow core optical fibre 16 may comprise a first coupling element 18 in which a first end portion 16a of the hollow core optical fibre 16 is received, and via which the hollow core optical fibre 16 is (e.g. pressure-tightly) secured to the first fluid outlet 12b. Preferably, at least one first sealing element, e.g. an elastically deformable sealing tube, is arranged (e.g. radially) between the first coupling element 18 and the first end portion 16a of the hollow core optical fibre 16. In a preferred embodiment, the first coupling element 18 and the first fluid outlet 12b may be connected by a screw connection. For this, the first coupling element 18 and the first fluid outlet 12b may comprise corresponding threaded sections. Thus, the first coupling element 18 and the first fluid outlet 12b may be connected to each other in a force-locking and/or form-locking manner.

In addition or alternatively, the fibre optic device 10 and/or the hollow core optical fibre 16 may comprise a second coupling element 19 in which a second end portion 16b of the hollow core optical fibre 16 is received, and via which the hollow core optical fibre 16 is (e.g. pressure-tightly) secured to the second fluid inlet 12a. Preferably, at least one second sealing element, e.g. an elastically deformable sealing tube, is arranged (e.g. radially) between the second coupling element 18 and the second end portion 16b of the hollow core optical fibre 16. In a preferred embodiment, the second coupling element 19 and the second fluid inlet 14a may be connected by a screw connection. For this, the second coupling element 19 and the second fluid inlet 14a may comprise corresponding threaded sections. Thus, the second coupling element 19 and the second fluid inlet 14a may be connected to each other in a force-locking and/or form-locking manner.

For coupling a polarised light beam into the hollow core optical fibre 16, the first fluid container 12 and/or its first container body may comprise a light transparent window 12c, which may be referred to as "first" light transparent window 12c for ease of differentiation. For example, the first light transparent window 12c may form a side wall of the first container body and/or may be incorporated or integrated into one of the first wall sections of the first container body in a fluid-tight manner. The first light transparent window 12c may separate an inside of the first fluid container 12 from an outside of the first fluid container 12. The first light transparent window 12c may be plain.

The first light transparent window 12c may be transparent for at least one of UV light, IR light, and visible light. For example, the first light transparent window 12c may be configured that light having a wavelength within an interval chosen between 100 nm and 2000 nm can pass through the first light transparent window 12c. The first light transparent window 12c may be, for example, made of glass, sapphire and/or fused silica.

The first light transparent window 12c may be arranged opposite to the first end portion 16a of the hollow core optical fibre 16 and/or opposite to the first fluid outlet 12b. For example, there may be a direct (e.g. straight) line of sight between the first light transparent window 12c and the first end portion 16a of the hollow core optical fibre 16 and/or the first fluid outlet 12b. In particular, the first light transparent window 12c and the first end portion 16a of the hollow core optical fibre 16 may be arranged such that the polarised light beam incident on the first light transparent window 12c can pass to the first end portion 16a of the hollow core optical fibre 16 and (at least in parts) couple into the hollow core optical fibre 16. Preferably, the first end portion 16a of the hollow core optical fibre 16 is arranged perpendicular to a main extension plane of the first light transparent window 12c.

In addition or alternatively, the second fluid container 14 and/or its second container body may comprise a light transparent window 14c, which may be referred to as "second" light transparent window 14c for ease of differentiation. For example, the second light transparent window 14c may form a side wall of the second container body and/or may be incorporated or integrated into one of the second wall sections of the second container body in a fluid-tight manner. The second light transparent window 14c may separate an inside of the second fluid container 14 from an outside of the second fluid container 14.

The second light transparent window 14c may principally have the same characteristics as the first light transparent window 12c. For example, thee second light transparent window 14c may also be transparent for at least one of UV light, IR light, and visible light. However, the first and second light transparent windows 12c and 14c may also be different, e.g. differ in its thickness and/or material.

Preferably, the second light transparent window 14c is arranged opposite to the second end portion 16b of the hollow core optical fibre 16 and/or opposite to the second fluid inlet 14a. For example, there may be a direct (e.g. straight) line of sight between the second light transparent window 14c and the second end portion 16b of the hollow core optical fibre 16 and/or the second fluid inlet 14a. In particular, the second light transparent window 14c and the second end portion 16b of the hollow core optical fibre 16 may be arranged such that light (e.g. an output light beam generated by an interaction of the polarised light beam with the fluid sample while passing through the hollow core optical fibre 16) exiting the hollow core optical fibre 16 at the second end portion 16b can pass to the second light transparent window 14c. Preferably, the second end portion 16b of the hollow core optical fibre 16 is arranged perpendicular to a main extension plane of the second light transparent window 14c.

Altogether, the hollow core optical fibre 16 may be arranged to direct light (e.g. the polarised light beam) incident on the first light transparent window 12c of the first fluid container 12 to the second light transparent window 14c of the second fluid container 14. On its way propagating through the hollow core optical fibre 16, the polarised light beam may interact with the fluid sample introduced in the hollow core optical fibre 16, preferably such that a polarisation characteristic of the polarised light beam (e.g. its direction of polarisation) is altered and an output light beam having a different polarisation characteristic compared to the original polarised light beam is generated. Preferably, the hollow core optical fibre 16 thereby runs along a straight line between the first fluid container 12 and the second fluid container 14. For example, the first light transparent window 12c, the hollow core optical fibre 16, and the second light transparent window 14c may be arranged on an imaginary straight line and/or flush with each other. However, generally, the hollow core optical fibre 16 may be curved or coiled.

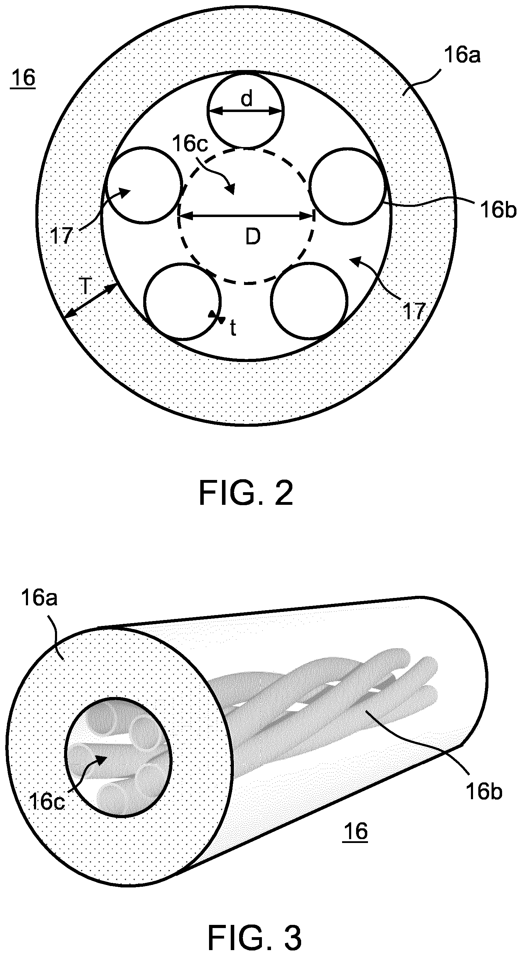

The hollow core optical fibre 16 used in this context is a, preferably twisted, single ring hollow core optical fibre, which will be described in the following in more detail referring to Figure 2.

Figure 2 shows a cross-sectional view of a single ring hollow core optical fibre according to an embodiment. Illustrated is a cross-section through the single ring hollow core optical fibre perpendicular to its longitudinal or fibre axis, wherein the longitudinal or fibre axis extends along the longest dimension of the single ring hollow core optical fibre.

The hollow core optical fibre 16 may comprise an outer cladding region 16a, a finite number of, preferably thin-walled and/or empty, hollow tubes 16b fused on the inside to the outer cladding region 16a, and a (e.g. central) hollow core region 16c. Preferably, the hollow core optical fibre 16 comprises (e.g. exactly) five hollow tubes 16b, as shown in the embodiment shown in Figure 2.

The hollow tubes 16b may be arranged between the hollow core region 16c and the outer cladding region 16a. I.e., the hollow tubes 16b may be arranged around the hollow core region 16c and be surrounded by said outer cladding region 16a. The outer cladding region 16a may thus have a greater radial distance to the hollow core region 16c than the hollow tubes 16b. The hollow tubes 16b may be attached to the outer cladding region 16a. For example, each of the hollow tubes 16b may be fused at a respective fusing point to the outer cladding region 16a. The outer cladding region 16a may thus directly contact each of the hollow tubes 16b.

The outer cladding region 16a may be cylindrical, tubular, and/or continuously extend along the longitudinal or fibre axis. The outer cladding region 16a may be made of fused silica glass and/or soft-glass. The outer cladding region 16a may have a circular cross-section (e.g. perpendicular to the longitudinal or fibre axis). In this context, the outer cladding region 16a may have (e.g. perpendicular to the longitudinal or fibre axis) a thickness T of at least 20 $\mu$m, preferably of at least 70 $\mu$m, particularly preferred of at least 150 $\mu$m. The outer cladding region 16a may delimit the hollow core optical fibre 16 on the outside.

The hollow tubes 16b may each be cylindrical, tubular, and/or continuously extend along the longitudinal or fibre axis. The hollow tubes 16b may form a (e.g. single) ring around the hollow core region 16c. The hollow tubes 16b may be (e.g. concentrically) arranged round the hollow core region 16c and/or each have a substantially circular in cross-section. The hollow tubes 16b may be made of fused silica glass and/or soft-glass. The hollow tubes 16b may not touch each other, and thus may be referred to in this context as non-touching hollow tubes. Consequently, the single ring hollow core optical fibre may also be referred to as revolver-type hollow core optical fibre.

As shown in Figure 2, each of the hollow tubes 16b may have a (e.g. average) inner tube diameter d. Further, the hollow core region 16c may have a (e.g. average) core diameter D, as defined in Figure 2. Preferably, the hollow core region 16c has a core diameter D of 10 $\mu$m < D ≤ 20 $\mu$m. In addition or alternatively, the inner tube diameter d of each hollow tubes 16b relative to the core diameter D may be diD = 0.7 and/or in the range between 0.66 and 0.73. Each of the hollow tubes 16b may have a (e.g. average) wall thickness t. For example, the wall thickness t of each hollow tubes 16b is between 100 nm and 1 $\mu$m, preferably between 200 nm and 800 nm, particularly preferred between 300 nm and 750 nm. The hollow tubes 16b may be identical and/or symmetrically around the hollow core region 16c, as shown in the embodiment of Figure 2. The hollow tubes 16b may be arranged equidistantly around the hollow core region 16c. Further, the hollow tubes 16b may each be free of a nested sub tube.

In a preferred embodiment, the hollow core optical fibre 16 is a twisted hollow core fibre, as shown in Figure 3. In this configuration, the hollow tubes 16b may helically spiral around the hollow core region 16c along the longitudinal or fibre axis. The hollow tubes 16b may each have a helically twisted shape along the longitudinal or fibre axis. For example, the twisted hollow core fibre may have a twist rate between 10 rad/m and 300 rad/m, preferably between 30 rad/m and 200 rad/m, particularly preferred between 50 rad/m and 150 rad/m.

In an exemplarily embodiment, the hollow core optical fibre 16 may have the following properties: The hollow core optical fibre 16 may be twisted along its length at a twist rate $\alpha$ = 157 rad/m. The hollow core optical fibre 16 may have a core of diameter D = 20 $\mu$m, surrounded by five glass hollow tubes 16b having an inner tube diameter d = 14 $\mu$m and a wall thickness t = 670 nm. The selected inner tube diameter relative to the core diameter diD = 0.7 preferably ensures high loss for the higher order modes, and for the chosen t, the fibre preferably exhibits a low-loss transmission window spanning from around 430 nm to around 610 nm when filled with water. The transmission window that may be delimited by spectral anti-crossings between the guided modes and capillary-wall resonances affecting both the loss and the dispersion of the waveguide and occurring at wavelengths

$$\lambda = \frac{2t}{m}\sqrt{n_{Si}^2 - n_{CO}^2}$$

where m is a positive integer number, and $n_{Si}$ and $n_{CO}$ are the refractive indices of the silica glass and the fibre core. This particular embodiment may be referred to hereafter as the test fibre.

Referring to Figures 4 and 5, an optical system 100 and a method for optical measurement of a fluid sample using said optical system 100 are described.

The optical system 100 comprises a fibre optic device 10 as described herein, e.g. the fibre optic device 10 shown in Figure 1. The optical system 100 further comprises a polarised light source device 20 and a polarisation detector device 30. Optionally, the optical system 100 may further comprise at least one focusing element 40 and/or at least one collimating element 50.

The polarised light source device 20 may be configured and arranged to generate a polarised light beam (e.g. having a wavelength between 100 nm and 1000 nm) incident on the (e.g. first) light transparent window 12c of the first fluid container 12. For example, the polarised light source device 20 may comprise a light source 22, such as a laser light source, configured to generate a light beam. The light beam may be polarised already. Alternatively, the light beam may be unpolarised. The polarised light source 20 device may further comprise a polariser 24, such as a linear polariser, arranged to polarise the generated light beam to generate the polarised light beam. For example, the polariser 24 may be a (e.g. absorptive and/or beam-splitting) linear polariser and/or comprise a half-wave plate and/or a quarter-wave plate. Altogether, the polarised light source device 20 may be configured to emit the polarised light beam in a well-defined polarisation state, wherein preferably the polarised light beam is linearly polarised.

In order to increase the amount of light coupled into the hollow core optical fibre 16, at least one focusing element 40 may be arranged in the beam path between the polarised light source device 20 and the (e.g. first) light transparent window 12c of the first fluid container 12. For example, the at least one focusing element 40 may comprise a focusing lens, a focusing mirror and/or a focusing meta material-structure. The at least one focusing element 40 may be arranged and/or configured to focus the polarised light beam generated by the polarised light source device 20 onto the (e.g. first) light transparent window 12c of the first fluid container 12 and/or onto the first end of the hollow core optical 16.

Therefore, the optical system 100 allows for reliably coupling the polarised light beam generated by the polarised light source device 20 into the hollow core optical 16. Advantageously, this can be used for measuring the optical rotation and/or circular dichroism of the fluid sample, wherein in a first step S1 the fluid sample is introduced into the hollow core optical fibre 16 via the fibre optic device 10. For example, the fluid sample may be pumped or pressed via the (e.g. first) inlet 12a of a first fluid container 12 into the first fluid container 12, from the first fluid container 12 into the hollow core optical fibre 16, and from the hollow core optical fibre 16 into the second fluid container 14, until the hollow core optical fibre 16 is completely filled with the fluid sample. For example, after introducing the fluid sample, the fluid sample may be arranged in the hollow core region 16c and/or in the hollow tubes 16b.

In a further step S2, the polarised light beam generated by a polarised light source device 20 passes through the hollow core optical fibre 16 and the fluid sample introduced in the hollow core optical fibre 16. As mentioned before, this may be done by coupling the, preferably focused, polarised light beam via the (e.g. first) light transparent window 12c of the first fluid container 12 into the first end of the hollow core optical fibre 16. The passing of the polarised light beam through the hollow core optical fibre 16 and the fluid sample may comprise propagating of the polarised light beam from the first end of the hollow core optical fibre 16 to the second end of the hollow core optical fibre 16.

While passing through the hollow core optical fibre 16 and the fluid sample, in a further step S3, polarisation characteristics of the polarised light beam are altered by the interaction of the polarised light beam with the fluid sample to generate an output light beam. For example, the direction of polarisation of the polarised light beam and/or its polarisation state may be altered due to an interaction of the polarised light beam with the electronic structure of ions or molecules in the fluid sample. The output light beam may be guided by the hollow core optical fibre 16 to its second end, leave the hollow core optical fibre 16 and exit the fibre optic device 10 via the (e.g. second) light transparent window 14c of the second fluid container 14.

In a further step S4, a polarisation state of the fluid sample is measured via the polarisation detector device 30, preferably by comparing polarisation characteristics of the polarised light beam and the output light beam. For this, the polarisation detector device 30 may be arranged to receive the output light beam exiting the (e.g. second) light transparent window 14c of the second fluid container 14 and may be configured to generate an output signal, which depends on the polarisation state of the received output light beam. For example, the polarisation detector 30 device may comprise an analyser polariser 32 and a photodetector 34. The analyser polariser 32 may be a (e.g. absorptive and/or beam-splitting) linear analyser polariser and/or comprise a polarising prism. The analyser polariser 32 may be rotatable, in particular in a defined rotation angle with respect to the polariser 24 of the polarised light source device 20 and/or the direction of polarisation of the polarised light beam. The photodetector 34 may be configured to receive the detection light beam and to produce the output signal based on an intensity, a power, an energy, and/or a wavelength of the received detection light beam. For example, the photodetector 34 may comprise a CCD, a CMOS device, a phototransistor, and/or photodiode. By plotting the output signal as a function of the rotation angle, for example, an angle by which the polarisation plane of the polarised light beam rotated due to the interaction with the fluid sample can be determined.

In order to optimally exploit a detection surface of the polarisation detector device 30 and/or the photodetector 34, the at least one collimating element 50 may be arranged in the beam path between the (e.g. second) light transparent window 14c of the second fluid container 14 and the analyser polariser 32. The at least one collimating element 50 may comprise a collimating lens, a collimating mirror and/or a collimating meta material-structure. The at least one collimating element 50 may be arranged to collimate the output light beam before reaching the analyser polariser 32.

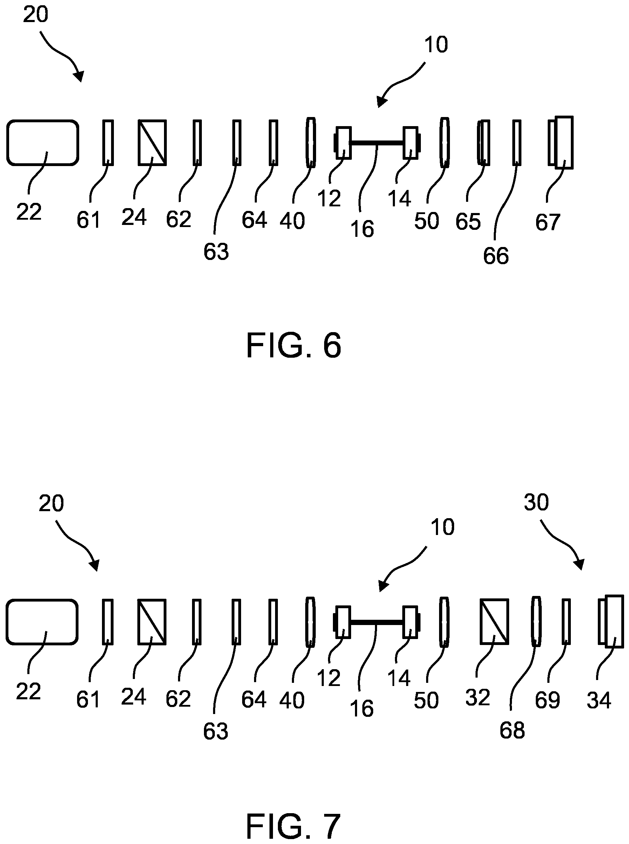

Referring to Figure 6, an exemplary setup is described to characterize the above-mentioned test fibre, wherein the setup may optionally also include components for measuring helical dichroism.

In this context, the end or end facets of the test fibre are placed into the first and second fluid containers 12, 14, respectively. For in- and outcoupling light, the (e.g. first) light transparent window 12c of the first fluid container 12 and the (e.g. second) light transparent window 14c of the second fluid container 14 are made of fused silica. The test fibre is filled with distilled water using a syringe with a microparticle filter. However, other fluid samples may also be used. The light source 22 of the polarised light source device 20 is a supercontinuum extending down to around 500 nm obtained by pumping a tapered solid-core photonic-crystal fibre with nanosecond pulses from a Q-switched laser (7 uJ/pulse, 1030 nm, 500 Hz).

To control the topological charge $\ell$ and the circular polarisation handedness s for a possible helical dichroism measurement, a combination of a quarter waveplate 62, a vortex retarder 63 (ARCoptix Spiral Plate standard), and a half-wave plate 64 may be used. As illustrated in Figure 4, for measuring the optical rotation and/or circular dichroism, no vortex retarder is needed and the light does not need to carry a topological charge. Further, a bandpass filters 61 with a bandwidth of 10 nm at full-width half-maximum (FWHM) and cantered at 520 nm, 550 nm, and 580 nm is used as to select a narrow portion of the light spectrum. The retardance of the vortex retarder 63 is tuned for each wavelength by adjusting the driver voltage (ARCoptix LC driver). With the vortex retarder 63 tuned to a phase shift of $\pi$, four different vortex beams are generated by combination of topological charge $\ell = \pm 1$ and circular polarisation (CP) handedness s = $\pm 1$: After selecting the sign of $\ell$ by rotating the quarter-wave plate 62 (fast axis at $\pm 45$ degrees with respect to the polariser 24), the sign of s is changed by moving the half-wave plate 64 in or out of the beam path. For transmission measurements of the fundamental mode ($\ell = 0$), the driver voltage of the vortex retarder 63 is adjusted for a phase shift of $2\pi$.

After the polarised light beam is launched into the water-filled test fibre via the least one focusing element 40 configured as achromatic lens (5 cm focal length), and after collimating the output light beam with the at least one collimating element 50 configured as a second lens (3 cm focal length), $\ell$ is determined. For this, a cylindrical lens 65 (30 cm focal length) followed by a neutral density filter 66 so as to maximize the dynamic range, and a beam profiler 67 is used. By this, camera images and/or intensity patterns at the focus of a cylindrical lens can be determined, characterizing the mode field at the end facet of the test fibre. Again, as apparent from Figure 4, for measuring the optical rotation and/or circular dichroism, the topological charge $\ell$ does is not excited/measured and no cylindrical lens is necessary.

Referring to Figure 7, an exemplary optical system 100 is described, which allows for an accurate characterization of the guided light and for measuring its helical dichroism. Particularly, the exemplary optical system 100 may be used to obtain near-field maps of intensity and of the absolute value of the normalized $S_3$ Stokes parameter. The optical system 100 of Figure 7 differs from the setup described in Figure 6 in that the cylindrical lens 65, the neutral density filter 66, and the beam profiler 67 are omitted and replaced by analyser polariser 32 configured as a Wollaston prism, an achromatic lens 68, a neutral density filter 69, and photodetector 34 configured as a synchronized camera. By this, a near-field mapping of relative intensity and $|S_3|$ can be determined. For the test fibre, the maps reveal that the fraction of light in the outer cladding region 16a amounts to 4.2% in the weakly attenuated case and 32% in the high-loss case. As the outer cladding region 16a acts as a non-polarisation-maintaining highly multimode waveguide, any light coupled into it reaches the end-facet in a highly mixed polarisation state. By disregard this light in the outer cladding region 16a to avoid introducing systematic measurement errors, a mean value of $|S_3|$ - weighted by intensity and averaged across the liquid-filled area - larger than 0.99 in the weakly attenuated case and larger than 0.97 in the high-loss case is obtained.

By replacing the synchronized camera by a laser power meter (Ophir Nova II / PD300-UV, averaging 10 sec), the fibre transmission for each $\ell$ and s of the polarised light beam can be measured. The measurements reveal that the test fibre exhibits strong and broadband helical dichroism: For each of the three wavelengths, the transmission of the vortex modes launched into the test fibre varies by at least 10 dB with respect to the sign of $\ell$. The actual attenuation difference cannot be obtained from the measured transmission due to the weak $+\ell$-mode masking the highly attenuated mode. A significant dependence of the transmission on the sign of s is not observed.

In summary, by using a 25 cm-long twisted single-ring hollow-core test fiber a strong and broadband helical dichroism (HD) in the visible spectral range can be measured with a loss difference of at least 10 dB over a spectral range spanning more than 60 THz.

Although the invention has been described with reference to certain exemplary embodiments, it is evident to a person skilled in the art, that various changes can be implemented and equivalents can be used as a substitute without departing from the scope of the invention. Consequently, the invention is not to be limited to the disclosed exemplary embodiments, but is to comprise all exemplary embodiments falling within the scope of the attached patent claims. More particularly, the invention also claims protection for the subject-matter and the features of the dependent claims independently of the referenced claims.

**Claims**

1.   A fibre optic device (10) for an optical system (100),
comprising:

a first fluid container (12), comprising a fluid inlet (12a), a fluid outlet (12b), and a light transparent window (12c);
a second fluid container (14), comprising a fluid inlet (14a), a fluid outlet (14b), and a light transparent window (14c);
a hollow core optical fibre (16) fluidically connecting the fluid outlet (12b) of the first fluid container (12) to the fluid inlet (14a) of the second fluid container (14) and arranged to direct light incident on the light transparent window (12c) of the first fluid container (12) to the light transparent window (14c) of the second fluid container (14);
wherein the hollow core optical fibre (16) is a, preferably twisted, single ring hollow core optical fibre.

2.   The fibre optic device (10) according to claim 1, wherein:

the first fluid container (12) and the second fluid container (14) are arranged at opposite ends of the hollow core optical fibre (16);
the hollow core optical fibre (16) comprises several separate fluid passages (17), each configured to transport a fluid sample between the first fluid container (12) and the second fluid container (14); and/or
the hollow core optical fibre (16) having a length between 1 cm and 2 m, preferably between 5 cm and 50 cm, particularly preferred between 10 cm and 30 cm.

3.   The fibre optic device (10) according to claim 1 or 2, wherein the hollow core optical fibre (16) comprises:

an outer cladding region (16a); and
hollow tubes (16b), preferably five hollow tubes (16b), surrounded by the outer cladding region (16a), wherein each of the hollow tubes (16b) is fused to the outer cladding region (16a) to form a ring around a hollow core region (16c) of the hollow core optical fibre (16).

4.   The fibre optic device (10) according to claim 3, wherein:

the hollow core optical fibre (16) comprises exactly five hollow tubes (16b);
each of the hollow tubes (16b) has a circular cross-section; and/or
the hollow tubes (16b) are not touching each other; and/or
the hollow tubes (16b) are arranged symmetrically around the hollow core region (16c); and/or

each of the hollow tubes (16b) is free of a nested sub tube.

5. The fibre optic device (10) according to claim 3 or 4, wherein:

the hollow core region (16c) has a core diameter, D, of 10 $\mu$m < D and/or of D $\leq$ 20 $\mu$m; and/or each of the hollow tubes (16b) has an inner tube diameter, d, wherein the inner tube diameter relative to the core diameter diD is 0.66 < diD < 0.73 and/or wherein the inner tube diameter is smaller than the core diameter d < D; the hollow core optical fibre (16) has a higher order modes, HOM, suppression of at least 40 dB/m, preferably of at least 70 dB/m, particularly preferred of at least 110 dB/m; and/or the hollow core optical fibre (16) is a twisted hollow core fibre having a twist rate, $\alpha$, between 10 rad/m and 300 rad/m, preferably between 30 rad/m and 200 rad/m, particularly preferred between 50 rad/m and 150 rad/m; and/or each hollow tube (16b) has a wall thickness, t, between 100 nm and 1 $\mu$m , preferably between 200 nm and 800 nm, particularly preferred between 300 nm and 750 nm.

6. The fibre optic device (10) according to one of claims 3 to 5, wherein:

the outer cladding region (16a) directly contacts each of the hollow tubes (16b); and/or each of the hollow tubes (16b) is attached to the outer cladding region (16a); and/or the outer cladding region (16a) has a thickness, T, of at least 20 $\mu$m, preferably of at least 70 $\mu$m, particularly preferred of at least 150 $\mu$m; and/or the outer cladding region (16a) and/or the hollow tubes (16b) are made of fused silica glass and/or soft-glass.

7. The fibre optic device (10) according to one of the preceding claims, wherein:

the light transparent window (12c) of the first fluid container (12) and the fluid outlet (12b) of the first fluid container (12) are arranged facing each other and/or flush with each other; and/or the light transparent window (14c) of the second fluid container (14) and the fluid inlet (14a) of the second fluid container (14) are arranged facing each other and/or flush with each other; and/or the fluid inlet (12a) and the fluid outlet (12b) of the first fluid container (12) are arranged inclined, preferably perpendicular, to each other; and/or the fluid inlet (14a) and the fluid outlet (14b) of the second fluid container (14) are arranged inclined, preferably perpendicular, to each other; and/or the hollow core optical fibre (16) runs along a straight line between the first fluid container (12) and the second fluid container (14).

8. The fibre optic device (10) according to one of the preceding claims, further comprising: a first coupling element (18), preferably a ferrule, wherein a first end portion (16a) of the hollow core optical fibre (16) is received in the first coupling element (18), and wherein the hollow core optical fibre (16) is, preferably pressure-tightly, secured to the first fluid container (12) via the first coupling element (18), preferably in a force-locking and/or form-locking manner; and/or a second coupling element (19), preferably a ferrule, wherein a second end portion (16b) of the hollow core optical fibre (16) is received in the second coupling element (19), and wherein the hollow core optical fibre (16) is, preferably pressure-tightly, secured to the second fluid container (14) via the second coupling element (19), preferably in a force-locking and/or form-locking manner.

9. The fibre optic device (10) according to one of the preceding claims, wherein:

the hollow core optical fibre (16) is detachable connected to the first fluid container (12) and/or second fluid container (14); or the hollow core optical fibre (16), the first fluid container (12), and the second fluid container (14) are integrally connected to each other to form a single piece.

10. An optical system (100) for optical measurement, preferably for measuring an optical rotation and/or circular dichroism and/or helical dichroism of a fluid sample, comprising:

a fibre optic device (10) according to one of the preceding claims; a polarised light source device (20) configured and arranged to generate a polarised light beam incident on the light transparent window (12c) of the first fluid container (12); a polarisation detector device (30), arranged to receive an output light beam exiting the light transparent window (14c) of the second fluid container (14) and configured to generate an output signal which depends on the polarisation state of the received output light beam.

11. The optical system (100) of claim 10, wherein:

the polarised light beam is linearly or circularly polarised; and/or

the polarised light beam has a wavelength between 100 nm and 2000 nm, preferably between 200 nm and 1000 nm, particularly preferred between 400 nm and 600 nm; and/or

the polarised light source device (20) is directly attached to and/or arranged directly adjacent to and/or supported by the light transparent window (12c) of the first fluid container (12); and/or the polarised light source device (20) comprises:

   a light source (22), preferably a laser light source, configured to generate a light beam; and

   a polariser (24), preferably a linear polariser, arranged to polarise the generated light beam to generate the polarised light beam.

12. The optical system (100) of claim 10 or 11, wherein:
the polarisation detector device (30) comprises:

   a rotatable and/or rotating analyser polariser (32), preferably a linear analyser polariser, arranged to polarise the output light beam to generate a polarised detection light beam; and

   photodetector (34), configured to receive the detection light beam and produce the output signal based on an intensity, a power, an energy, and/or a wavelength of the received detection light beam.

13. The optical system (100) according to one of claims 10 to 12, further comprising:

   at least one focusing element (40), preferably comprising a focusing lens, a focusing mirror and/or a focusing meta material-structure, arranged to focus the generated polarised light beam onto the light transparent window (12c) of the first fluid container (12); and/or

   at least one collimating element (50), preferably comprising a collimating lens, a collimating mirror and/or a collimating meta material-structure, arranged to collimate the output light beam before entering the polarisation detector device (30).

14. A method for optical measurement, preferably for measuring an optical rotation and/or circular dichroism and/or helical dichroism of a fluid sample, particularly preferred using an optical system (100) according to one of claims 10 to 13, wherein the method comprises:

   introducing, preferably via a fibre optic device (10), a fluid sample into a hollow core optical fibre (16), wherein the hollow core optical fibre (16) is a, preferably twisted, single ring hollow core optical fibre;

   passing a polarised light beam, preferably generated by a polarised light source device (20), through the hollow core optical fibre (16) and the fluid sample introduced in the hollow core optical fibre (16);

   altering polarisation characteristics of the polarised light beam while passing through the hollow core optical fibre (16) and the fluid sample by interacting with the fluid sample to generate an output light beam; and

   measuring a polarisation state of the generated output light beam, preferably via a polarisation detector device (30), by comparing polarisation characteristics of the polarised light beam and the output light beam.

15. The method according to claim 14, wherein:

   the fluid sample is a liquid; and/or
   the fluid sample comprises at least one chiral molecule and/or at least one chiral ion; and/or
   the fluid sample comprises at least one enantiomer.

16. The method according to claim 14 or 15, wherein:
the step of introducing comprises pressing the fluid sample successively through the following components: an inlet (12a) of a first fluid container (12), the hollow core optical fibre (16) fluidically connected to an outlet (12b) of the first fluid container (12), an inlet (14a) of a second fluid container (12) fluidically connected to the hollow core optical fibre (16), and an outlet (14b) of the second fluid container (14).

17. The method according to one of claims 14 to 16, wherein:
while the polarised light beam passes through the hollow core optical fibre (16) and the fluid sample introduced in the hollow core optical fibre (16):

   the fluid sample, preferably continuously, flows through the hollow core optical fibre (16); or
   the fluid sample is static and/or does not flow through the hollow core optical fibre (16).

FIG. 1

FIG. 2

FIG. 3

FIG. 4

FIG. 5

**FIG. 6**

**FIG. 7**

Europäisches
Patentamt

European
Patent Office

Office européen
des brevets

# EUROPEAN SEARCH REPORT

**Application Number**

EP 24 20 6234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CA 2 961 847 A1 (UNIV LAKEHEAD [CA]) 23 September 2018 (2018-09-23) * page 13, line 16 - page 16, line 16; figures 1-2 * | 1-17 | INV. G01N21/21 G01N21/19 G01N21/05 G02B6/032 G02B6/02 |
| Y | EP 1 229 322 A1 (HORIBA LTD [JP]) 7 August 2002 (2002-08-07) * paragraphs [0051] - [0071]; figure 1 * | 1-17 | |
| Y | GAO RAN ET AL: "Optofluidic Immunosensor Based on Resonant Wavelength Shift of a Hollow Core Fiber for Ultratrace Detection of Carcinogenic Benzo[a]pyrene", ACS PHOTONICS, vol. 5, no. 4, 22 February 2018 (2018-02-22), pages 1273-1280, XP093255928, ISSN: 2330-4022, DOI: 10.1021/acsphotonics.7b01009 * the whole document * | 1-3 | |
| Y,D | ROTH P. ET AL: "Strong circular dichroism for the HE 11 mode in twisted single-ring hollow-core photonic crystal fiber", OPTICA, vol. 5, no. 10, 18 October 2018 (2018-10-18), page 1315, XP093256313, US ISSN: 2334-2536, DOI: 10.1364/OPTICA.5.001315 * the whole document * | 1-17 | TECHNICAL FIELDS SEARCHED (IPC) G01N G02B |

-/--

The present search report has been drawn up for all claims

| Place of search | Date of completion of the search | Examiner |
|---|---|---|
| Munich | 5 March 2025 | Riblet, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 20 6234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | HELFRICH CHRISTOF ET AL: "Optimized Microstructure Design of Hollow-Core Photonic Crystal Fibres for Ultra-Sensitive Optofluidic Sensing", 2023 CONFERENCE ON LASERS AND ELECTRO-OPTICS EUROPE & EUROPEAN QUANTUM ELECTRONICS CONFERENCE (CLEO/EUROPE-EQEC), IEEE, 26 June 2023 (2023-06-26), page 1, XP034417299, DOI: 10.1109/CLEO/EUROPE-EQEC57999.2023.10231708 [retrieved on 2023-09-05] * the whole document * | 1-17 | |
| Y,D | PATRICK UEBEL ET AL: "Broadband robustly single-mode hollow-core PCF by resonant filtering of higher-order modes", OPTICS LETTERS, vol. 41, no. 9, 1 May 2016 (2016-05-01), page 1961, XP055482245, US ISSN: 0146-9592, DOI: 10.1364/OL.41.001961 * the whole document * | 1-17 | **TECHNICAL FIELDS SEARCHED (IPC)** |
| A | US 2024/167935 A1 (LIAO CHIEN-SHENG [US]) 23 May 2024 (2024-05-23) * paragraph [0024]; figure 1 * | 1-17 | |

-/--

The present search report has been drawn up for all claims

| Place of search | Date of completion of the search | Examiner |
|---|---|---|
| Munich | 5 March 2025 | Riblet, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

| | Europäisches Patentamt<br>European Patent Office<br>Office européen des brevets | **EUROPEAN SEARCH REPORT** | Application Number<br>**EP 24 20 6234** |
| --- | --- | --- | --- |

**DOCUMENTS CONSIDERED TO BE RELEVANT**

| Category | Citation of document with indication, where appropriate, of relevant passages | Relevant to claim | CLASSIFICATION OF THE APPLICATION (IPC) |
| --- | --- | --- | --- |
| A | JOHANNES B\"URGER ET AL: "On-chip twisted hollow-core light cages: enhancing planar photonics with 3D nanoprinting",<br>ARXIV.ORG, CORNELL UNIVERSITY LIBRARY, 201 OLIN LIBRARY CORNELL UNIVERSITY ITHACA, NY 14853,<br>11 September 2024 (2024-09-11),<br>XP091881120,<br>* the whole document *<br>----- | 1-17 | |
| A | WO 2021/019405 A1 (CAMBRIDGE ENTPR LTD [GB]) 4 February 2021 (2021-02-04)<br>* abstract; figures *<br>----- | 1-17 | |
| | | | **TECHNICAL FIELDS SEARCHED (IPC)** |

The present search report has been drawn up for all claims

| Place of search | Date of completion of the search | Examiner |
| --- | --- | --- |
| Munich | 5 March 2025 | Riblet, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

              

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 24 20 6234

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | | Publication date | Patent family member(s) | | Publication date |
|---|---|---|---|---|---|
| CA 2961847 | A1 | 23-09-2018 | NONE | | |
| EP 1229322 | A1 | 07-08-2002 | DE | 60223183 T2 | 14-08-2008 |
| | | | EP | 1229322 A1 | 07-08-2002 |
| | | | JP | 3762677 B2 | 05-04-2006 |
| | | | JP | 2002296175 A | 09-10-2002 |
| | | | KR | 20020063518 A | 03-08-2002 |
| | | | US | 2002102183 A1 | 01-08-2002 |
| US 2024167935 | A1 | 23-05-2024 | US | 2024167935 A1 | 23-05-2024 |
| | | | WO | 2024112726 A1 | 30-05-2024 |
| WO 2021019405 | A1 | 04-02-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3649090 B1
- EP 3136143 A1
- EP 4030230 A1
- EP 4163715 A1

**Non-patent literature cited in the description**

- **BARRON, L. D.** Molecular Light Scattering and Optical Activity. Cambridge University Press, 2004
- **OH, S. S.** ; **HESS, O.** Chiral Metamaterials: Enhancement and Control of Optical Activity and Circular Dichroism. *Nano Converg.*, 2015, vol. 2 (1), 24, https://doi.org/10.1186/s40580- 015-0058-2
- **WARNING, L. A.** ; **MIANDASHTI, A. R.** ; **MCCARTHY, L. A.** ; **ZHANG, Q.** ; **LANDES, C. F.** ; **LINK, S.** Nanophotonic Approaches for Chirality Sensing. *ACS Nano*, 2021, vol. 15 (10), 15538-15566, https://doi.org/10.1021/acsnano.1c04992
- **KOPP, V. I.** ; **CHURIKOV, V. M.** ; **SINGER, J.** ; **CHAO, N.** ; **NEUGROSCHL, D.** ; **GENACK, A. Z.** Chiral Fiber Gratings. *Science*, 2004, vol. 305 (5680), 74-75, https://doi.org/10.1126/science.1097631
- **ROTH, P.** ; **CHEN, Y.** ; **GÜNENDI, M. C.** ; **BERAVAT, R.** ; **EDAVALATH, N. N.** ; **FROSZ, M. H.** ; **AHMED, G.** ; **WONG, G. K. L.** ; **RUSSELL, P. S. J.** Strong Circular Dichroism for the HE11 Mode in Twisted Single-Ring Hollow-Core Photonic Crystal Fiber. *Optica*, 2018, vol. 5 (10), 1315-1321, https://doi.org/10.1364/OP-TICA.5.001315
- **WONG, G. K. L.** ; **XI, X. M.** ; **FROSZ, M. H.** ; **RUSSELL, P. S. J.** Enhanced Optical Activity and Circular Dichroism in Twisted Photonic Crystal Fiber. *Opt. Lett.*, 2015, vol. 40 (20), 4639-4642, https://doi.org/10.1364/OL.40.004639
- **MOHAMMADI, E.** ; **TSAKMAKIDIS, K. L.** ; **ASKARPOUR, A. N.** ; **DEHKHODA, P.** ; **TAVAKOLI, A.** ; **ALTUG, H.** Nanophotonic Platforms for Enhanced Chiral Sensing. *ACS Photonics*, 2018, vol. 5 (7), 2669-2675, https://doi.org/10.1021/acsphotonics.8b00270
- **MA, W.** ; **KUANG, H.** ; **XU, L.** ; **DING, L.** ; **XU, C.** ; **WANG, L.** ; **KOTOV, N. A.** Attomolar DNA Detection with Chiral Nanorod Assemblies. *Nat. Commun.*, 2013, vol. 4 (1), 2689, https://doi.org/10.1038/ncomms3689
- **ROUXEL, J. R.** ; **RÖSNER, B.** ; **KARPOV, D.** ; **BACELLAR, C.** ; **MANCINI, G. F.** ; **ZINNA, F.** ; **KINSCHEL, D.** ; **CANNELLI, O.** ; **OPPERMANN, M.** ; **SVETINA, C.** Hard X-Ray Helical Dichroism of Disordered Molecular Media. *Nat. Photonics*, 2022, vol. 16 (8), 570-574, https://doi.org/10.1038/s41566-022-01022-x
- **BÉGIN, J.-L.** ; **JAIN, A.** ; **PARKS, A.** ; **HUFNAGEL, F.** ; **CORKUM, P.** ; **KARIMI, E.** ; **BRABEC, T.** ; **BHARDWAJ, R.** Nonlinear Helical Dichroism in Chiral and Achiral Molecules. *Nat. Photonics*, 2023, vol. 17 (1), 82-88, https://doi.org/10.1038/s41566-022-01100-0
- **HE, C.** ; **SHEN, Y.** ; **FORBES, A.** Towards Higher-Dimensional Structured Light. *Light Sci. Appl.*, 2022, vol. 11 (1), 205, https://doi.org/10.1038/s41377-022-00897-3
- **BRULLOT, W.** ; **VANBEL, M. K.** ; **SWUSTEN, T.** ; **VERBIEST, T.** Resolving Enantiomers Using the Optical Angular Momentum of Twisted Light. *Sci. Adv.*, 2016, vol. 2 (3), e1501349, https://doi.org/10.1126/sciadv.1501349
- **NI, J.** ; **LIU, S.** ; **WU, D.** ; **LAO, Z.** ; **WANG, Z.** ; **HUANG, K.** ; **JI, S.** ; **LI, J.** ; **HUANG, Z** ; **XIONG, Q.** Gigantic Vortical Differential Scattering as a Monochromatic Probe for Multiscale Chiral Structures. *Proc. Natl. Acad. Sci.*, 2021, vol. 118 (2), e2020055118, https://doi.org/10.1073/pnas.2020055118
- **KERBER, R. M.** ; **FITZGERALD, J. M.** ; **OH, S. S.** ; **REITER, D. E.** ; **HESS, O.** Orbital Angular Momentum Dichroism in Nanoantennas. *Commun. Phys.*, 2018, vol. 1 (1), 1-7, https://doi.org/10.1038/s42005-018-0088-2
- **NI, J.** ; **LIU, S.** ; **HU, G.** ; **HU, Y.** ; **LAO, Z.** ; **LI, J.** ; **ZHANG, Q.** ; **WU, D.** ; **DONG, S.** ; **CHU, J.** Giant Helical Dichroism of Single Chiral Nanostructures with Photonic Orbital Angular Momentum. *ACS Nano*, 2021, vol. 15 (2), 2893-2900, https://doi.org/10.1021/acsnano.0c08941

- **OUYANG, X.** ; **XU, Y** ; **XIAN, M.** ; **FENG, Z.** ; **ZHU, L.** ; **CAO, Y.** ; **LAN, S.** ; **GUAN, B.-O.** ; **QIU, C.-W.** ; **GU, M.** Synthetic Helical Dichroism for Six-Dimensional Optical Orbital Angular Momentum Multiplexing. *Nat. Photonics*, 2021, vol. 15 (12), 901-907, https://doi.org/10.1038/s41566-021-00880-1

- **RUSSELL, P. ST. J.** ; **BERAVAT, R.** ; **WONG, G. K. L.** Helically Twisted Photonic Crystal Fibres. *Philos. Trans. R. Soc. Math. Phys. Eng. Sci.*, 2017, vol. 375 (2087), 20150440, https://doi.org/10.1098/r-sta.2015.0440

- **DAVTYAN, S** ; **CHEN, Y.** ; **FROSZ, M. H.** ; **RUSSELL, P. S. J.** ; **NOVOA, D.** Robust Excitation and Raman Conversion of Guided Vortices in a Chiral Gas-Filled Photonic Crystal Fiber. *Opt. Lett.*, 2020, vol. 45 (7), 1766-1769, https://doi.org/10.1364/OL.383760

- **GREGG, P.** ; **KRISTENSEN, P.** ; **RAMACHANDRAN, S.** Conservation of Orbital Angular Momentum in Air-Core Optical Fibers. *Optica*, 2015, vol. 2 (3), 267-270, https://doi.org/10.1364/OPTICA.2.000267

- **UEBEL, P.** ; **GÜNENDI, M. C.** ; **FROSZ, M. H.** ; **AHMED, G.** ; **EDAVALATH, N. N.** ; **MÉNARD, J.-M.** ; **RUSSELL, P. S. J.** Broadband Robustly Single-Mode Hollow-Core PCF by Resonant Filtering of Higher-Order Modes. *Opt. Lett.*, 2016, vol. 41 (9), 1961-1964, https://doi.org/10.1364/OL.41.001961

- **EDAVALATH, N. N.** ; **GÜNENDI, M. C.** ; **BERAVAT, R.** ; **WONG, G. K. L.** ; **FROSZ, M. H.** ; **MÉNARD, J.-M.** ; **RUSSELL, P. S. J.** Higher-Order Mode Suppression in Twisted Single-Ring Hollow- Core Photonic Crystal Fibers. *Opt. Lett.*, 2017, vol. 42 (11), 2074-2077, https://doi.org/10.1364/OL.42.002074

- **HELFRICH, C.** ; **TANI, F.** Optimized Microstructure Design of Hollow-Core Photonic Crystal Fibres for Ultra-Sensitive Optofluidic Sensing. *2023 Conference on Lasers and Electro-Optics Europe & European Quantum Electronics Conference (CLEO/Europe- EQEC)*, 2023, 1-1, https://doi.org/10.1109/CLEO/Europe-EQEC57999.2023.10231708

- **ARCHAMBAULT, J.-L.** ; **BLACK, R. J.** ; **LACROIX, S.** ; **BURES, J.** Loss Calculations for Antiresonant Waveguides. *J. Light. Technol.*, 1993, vol. 11 (3), 416-423, https://doi.org/10.1109/50.219574

- **TANI, F.** ; **KÖTTIG, F.** ; **NOVOA, D.** ; **KEDING, R.** ; **RUSSELL, P. S. J.** Effect of Anti-Crossings with Cladding Resonances on Ultrafast Nonlinear Dynamics in Gas-Filled Photonic Crystal Fibers. *Photonics Res.*, 2018, vol. 6 (2), 84-88, https://doi.org/10.1364/PRJ.6.000084

- Broadband Multi-Species CARS in Gas-Filled Hollow-Core Photonic Crystal Fiber. **TYUMENEV, R.** ; **TRABOLD, B. M.** ; **SPÄTH, L.** ; **FROSZ, M. H.** ; **RUSSELL, P. S. J.** Conference on Lasers and Electro-Optics (2018), paper SM2K.5. Optica Publishing Group, 2018

- **ALPERIN, S. N.** ; **NIEDERRITER, R. D.** ; **GOPINATH, J. T.** ; **SIEMENS, M. E.** Quantitative Measurement of the Orbital Angular Momentum of Light with a Single, Stationary Lens. *Opt. Lett.*, 2016, vol. 41 (21), 5019-5022, https://doi.org/10.1364/OL.41.005019

- **ABRAMOCHKIN, E.** ; **VOLOSTNIKOV, V.** Beam Transformations and Nontransformed Beams. *Opt. Commun.*, 1991, vol. 83 (1), 123-135, https://doi.org/10.1016/0030-4018(91)90534-K

- **KOTLYAR, V. V.** ; **KOVALEV, A. A.** ; **PORFIREV, A. P.** Astigmatic Transforms of an Optical Vortex for Measurement of Its Topological Charge. *Appl. Opt.*, 2017, vol. 56 (14), 4095-4104, https://doi.org/10.1364/AO.56.004095

- **NICOLET, A.** ; **ZOLLA, F.** ; **AGHA, Y. O.** ; **GUENNEAU, S.** Leaky Modes in Twisted Microstructured Optical Fibers. *Waves Random Complex Media*, 2007, vol. 17 (4), 559-570, https://doi.org/10.1080/17455030701481849

- **MA, X.** ; **LIU, C.-H.** ; **CHANG, G.** ; **GALVANAUSKAS, A.** Angular-Momentum Coupled Optical Waves in Chirally-Coupled-Core Fibers. *Opt. Express*, 2011, vol. 19 (27), 26515-26528, https://doi.org/10.1364/OE.19.026515

- **FINGER, M. A.** ; **JOLY, N. Y.** ; **WEISS, T.** ; **RUSSELL, P. S. J.** Accuracy of the Capillary Approximation for Gas-Filled Kagomé-Style Photonic Crystal Fibers. *Opt. Lett.*, 2014, vol. 39 (4), 821-824, https://doi.org/10.1364/OL.39.000821

- **MARCATILI, E. A. J.** ; **SCHMELTZER, R. A.** Hollow Metallic and Dielectric Waveguides for Long Distance Optical Transmission and Lasers. *Bell Syst. Tech. J.*, 1964, vol. 43 (4), 1783-1809, https://doi.org/10.1002/j.1538-7305.1964.tb04108.x

- **ZEISBERGER, M.** ; **SCHMIDT, M. A.** Analytic Model for the Complex Effective Index of the Leaky Modes of Tube-Type Anti-Resonant Hollow Core Fibers. *Sci. Rep.*, 2017, vol. 7 (1), 11761, https://doi.org/10.1038/s41598-017-12234-5

- **F. SCHORN et al.** Measurement of Minute Liquid Volumes of Chiral Molecules Using In-Fiber Polarimetry. *Analytical Chemistry*, 2023, vol. 95 (6), 3204-3209

- **F. SCHORN et al.** Analysis of the chemical composition of chiral components by in-fiber polarimetry. *Jahrestreffen Deutscher Katalytiker*